# EUROPEAN PATENT SPECIFICATION

(11) **EP 1 507 639 B1**
(45) Date of publication and mention of the grant of the patent: **23.08.2006**
(21) Application number: 03727470.1
(22) Date of filing: 12.05.2003
(51) Int. Cl.: B29C 33/62, B29D 11/00, B29K 71/00

(54) **Moulding process with pretreatment of moulds**
Formverfahren mit Formvorbehandlung
Procédé de moulage avec prétaitement de moules

(30) Priority: 13.05.2002 EP 02010659
(43) Date of publication of application: 23.02.2005
(73) Proprietor: Novartis AG, 4056 Basel (CH); Novartis Pharma GmbH, 1230 Wien (AT)
(72) Inventor: BOTHE, Harald, 65207 Wiesbaden (DE); SEIFERLING, Bernhard, 63773 Goldbach (DE); HEINRICH, Axel, 63743 Aschaffenburg (DE); MÜLLER, Achim, 63762 Grossostheim (DE)
(74) Representative: Morris, Clive Sydney
(86) International application number: PCT/EP2003/004947
(87) International publication number: WO 2003/095171

(56) References cited:
- EP-A- 0 420 403
- EP-A- 0 765 733
- WO-A-93/00391
- US-A- 4 152 283
- US-A- 4 555 549
- US-A- 5 322 648
- US-A- 5 508 317

## Description

The present invention relates to a process for the pretreatment of reusable UV-curable moulds, used, for example, for the production of ophthalmic mouldings such as contact lenses, by applying a solution of a particular tenside to the lens surface.

Various processes for the manufacture of mouldings, in particular contact lenses, by photocrosslinking of macromonomers are known, for example, from U.S. Patent No. 5,583,163.

U.S. Patent No. 5,583,163 describes the manufacture of mouldings such as in particular contact lenses by crosslinking an aqueous solution of a water-soluble polyvinyl alcohol prepolymer in a mould. The process according to US 5,583,163 may be performed using moulds made from polypropylene, quartz, sapphire, glass or the like. Suitable reusable moulds are, for example, quartz or glass moulds. Contact lenses manufactured according to the process of the prior art patent have advantageous properties, such as good compatibility with the human cornea, resulting in a high wearing comfort and the absence of irritation and allergenic effects. However, despite the good mechanical stability of the underlying polyvinyl alcohol material, problems may sometimes show up in production. In particular, during mould opening and removing of the contact lenses from the mould, cracks, flaws or tears may occur in the lenses. In the worst case the contact lenses even break totally. Contact lenses having such defects have to be discarded and lower the overall production yield.

Accordingly, there is a need for improved manufacturing processes for contact lenses using reusable quartz or glass moulds yielding a higher percentage of lenses of acceptable quality.

The prevention of defects in the production of hydrophilic contact lenses using plastic moulds has been addressed in prior art. For example, EP 0 765 733 describes a method for the modification of the surface energy of hydrophobic contact lens moulds composed essentially of polystyrene to improve wettability and release characteristics by coating the surfaces of said moulds with a surfactant, prior to contact of said mould with the reactive monomer mixture. In EP 0 765 733, the preferred surfactant is polysorbate 20, which is basically a polyethylene oxide sorbitan mono-oleate, commercially available, e.g. under the trade name Tween 80® .

Surprisingly, it now has been found that the percentage of defective mouldings produced from polymerizable mixtures comprising a water-soluble prepolymer having crosslinkable groups in reusable glass or quartz moulds can be significantly decreased by pretreating the mould surfaces with a thin layer of a non-ionic poly(oxyethylene)-poly(oxypropylene) block copolymer.

Thus, the invention provides a process for the manufacture of a moulding, comprising the steps:
(a) applying to at least one surface of a multi-part UV-transmissible quartz or glass mould a solution of a poly(oxyethylene)-poly(oxypropylene) block copolymer,
(b) drying the solution on the mould,
(c) introducing an aqueous solution comprising a water-soluble prepolymer having crosslinkable groups into the mould,
(d) initiating of crosslinking by irradiation with UV-light,
(e) removing the mouldings from the mould, and
(f) washing and drying the mould,
wherein the water-soluble prepolymer having crosslinkable groups is a derivative of a polyvinyl alcohol having a molecular weight of at least about 2 000 that, based on the number of hydroxy groups of the polyvinyl alcohol, comprises from approximately 0.5 to approximately 80 % of units of formula 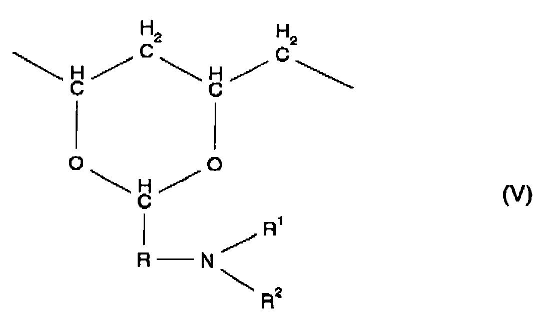 wherein R is C₁-C₈-alkylene, R¹ is hydrogen or C₁-C₇-alkyl and R² is an olefinically unsaturated, electron-attracting, copolymerizable radical preferably having up to 25 carbon atoms.

The process is particularly useful for, but not restricted to, the manufacture of opththalmic lenses such as, for example, contact lenses and intraocular lenses. It is preferred to repeat steps (a) to (f) in a cycle.

Preferred poly(oxyethylene)-poly(oxypropylene) block copolymers (PEO-PPO, where "PEO" is poly(ethylene oxide) and "PPO" is poly(propylene oxide) used in the inventive process are block copolymers which are derived from the sequential addition of propylene oxide and ethylene oxide to a difunctional alcohol or amine.

More preferred tensides are block copolymers of formula

HO-(CH₂CH₂-O)_{y} (CH(CH₃)CH₂O)ₓ-(CH₂CH₂O)_{y}-H (I),

HO-(CH(CH₃)CH₂O)ₓ (CH₂CH₂O)_{y} (CH₂CH(CH₃)O)ₓ- H (II),

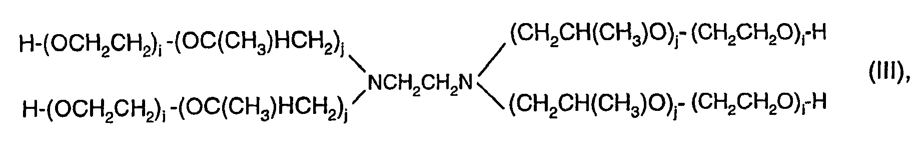

or 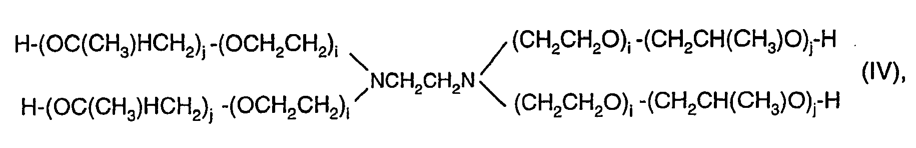 wherein i, j, x and y each have values from 2 to 400.

Triblock copolymers PEO-PPO-PEO of formula (I) are called poloxamers. They are obtained by the controlled addition of propylene oxide to the two hydroxyl groups of propylene glycol followed by the addition of ethylene oxide. Poloxamers are available, for example, under the tradename PLURONIC® or SYNPERONIC® . A various number of poloxamers is known, differing in the molecular weight and in the PEO/PPO ratio. Examples are poloxamer 101, 105, 108, 122, 123, 124, 181, 182, 183, 184, 185, 188, 212, 215, 217, 231, 234, 235, 237, 238, 282, 284, 288, 331, 333, 334, 335, 338, 401, 402, 403 and 407. The ratio of PEO/PPO may vary between wide limits.

The order of polyoxyethylene and polyoxypropylene blocks can be reversed creating block copolymers with the structure PPO-PEO-PPO (ll), which are known as PLURONIC-R® polymers.

Tetrafunctional poly(oxyethylene)-poly(oxypropylene) block copolymers of formula (lll), which are known under the trade name TETRONIC® may be obtained by the sequential addition of propylene oxide and ethylene oxide to ethylenediamine.

Again, the order of polyoxyethylene and polyoxypropylene blocks can be reversed creating block copolymers of formula (IV), commercially available, for example, as TETRONIC-R® polymers.

Polyoxypropylene-polyoxyethylene block copolymers can also be designed with hydrophilic blocks comprising a random mix of ethylene oxide and propylene oxide repeating units. To maintain the hydrophilic character of the block, ethylene oxide will predominate. Similarly, the hydrophobic block can be a mixture of ethylene oxide and propylene oxide repeating units. Such block copolymers are available under the trade name PLURADO® .

A particularly preferred group of poly(oxyethylene)-poly(oxypropylene) block copolymers used in step (a) of the present invention are poloxamers of formula (I) of any PEO/PPO ratio having a number average molecular weight of from about 3,000 to about 15,000 and tetrafunctional tensides of formula (III) having a number average molecular weight of from about 10,000 to about 30,000.

For an overview of poly(oxyethylene)-poly(oxypropylene) block copolymers of formulae (I) and (lll), cf., for example, H. P. Fiedler, Lexikon der Hilfsstoffe, ISBN 3-87193-230-2, Editio Cantor Verlag, Aulendorf, 2002, or Nace, Vaughn, M. ed., Nonionic surfactants: polyoxyalkylene block copolymers, New York 1996, ISBN 0-8247-9700-0.

The non-ionic tenside may be applied in step (a) of the process of the invention per se or preferably in solution.

Preferred solvents for the preparation of the solution of the tenside according to step (a) are water, C₁-C₄-alkanols, C₂-C₆-dialkylethers, C₃-C₅-ketones and mixtures thereof. Water and water/C₁-C₄-alkanol mixtures are preferred.

In a preferred embodiment, the solution in step (a) comprises, based on the entire weight of the solution, 0.01 to 3 % (w/w), preferably 0.02 to 0.5 % (w/w), and more preferably 0.05 to 0.3 % (w/w) and in particular 0.1 to 0.25 % (w/w) of the non-ionic tenside.

The solution of the non-ionic tenside may be applied to the mould surface by any known method, for example, by spraying, swabbing, dipping or stamping such that the surface is evenly coated therewith. Spraying using a spray nozzle is preferred.

The time required for steps (a) and (b) may vary within wide limits readily discernable by a person skilled in the art. Surprisingly, we have found that even with very short processing times for step (a) and/or (b), for example, less than 10 seconds, used in today's contact lens production, particularly favourable results may be been obtained.

The process of the present invention is especially useful in, but not restricted to, the manufacturing of ophthalmic mouldings by polymerizing a solution of a water-soluble prepolymer having crosslinkable groups. Preferably, the water-soluble prepolymer having crosslinkable groups is a derivative of a polyvinyl alcohol (PVA) having a molecular weight of at least about 2 000 that, based on the number of hydroxy groups of the polyvinyl alcohol, comprises from about 0.5 to about 80 % of units of formula 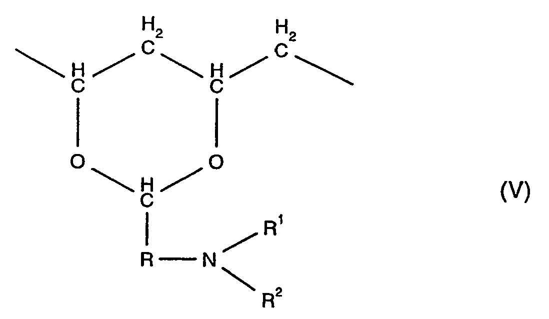 wherein R is C₁-C₈-alkylene, R¹ is hydrogen or C₁-C₇-alkyl and R² is an olefinically unsaturated, electron-attracting, copolymerizable radical preferably having up to 25 carbon atoms. Preferred PVA materials are disclosed in US 5,583,163.

In one embodiment, R² in formula (V) is -[CO-NH-(R⁵-NH-CO-O)_{q}-R⁶-O-]ₚ-CO-R⁴, wherein R⁴ is an olefinically unsaturated copolymerizable radical having from 2 to 8 carbon atoms, and R⁵ and R⁶ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms or arylenealkylenearylene having from 13 to 16 carbon atoms.

Particularly preferred are units of formula (V), wherein R is methylene, R¹ is hydrogen and R² is acryloyl.

Surprisingly, we have found that the pre-treatment according to the present invention materially improves release characteristics of contact lenses from reusable quartz or glass moulds. Due to a decreased adherence of the contact lens to the mould surface, the mechanical stress on the contact lens during the mould opening is lowered. The reduced mechanical stress in turn results in a decreased rate of damaged contact lenses. Accordingly, the overall yield of contact lenses of acceptable quality in the process of the invention is considerably increased relative to the process as disclosed in U.S. Patent No. 5,583,163.

A further benefit of the pretreatment of reusable quartz or glass lens moulds according to the present invention is that the lens moulds may be easily cleaned after removal of the mouldings from the mould, thereby making the mould with less effort ready for a next cycle comprising steps (a) to (f).

The following non-limitative examples illustrate the invention.

### Examples 1-9: Mould separation force in dependency of a pretreatment with selected tensides

Reusable glass lens moulds (made from glass of type BK-7) are sprayed during 4 seconds with about 40 µL of a 0.1 % (w/w) aqueous solution of the specific tenside, followed by 4 seconds of drying by an air jet. An aqueous prepolymer solution, prepared according to US 5,583,163, Example 15 (i), is transferred to the moulds. The lenses are then irradiated for about 10 seconds using a 200 W Oriel UV lamp (150 mW/cm²). The moulds are then opened and the separation forces measured with the tensile test machine.

**Table**

| Example | Tenside | Number average molecular weight | % [PEO] | Surface tension of a 0.1 % solution [mN/m] | Relative Mould Separation Force (Mould Sep. Force / MSF "without surfactant") x 100 |
|---|---|---|---|---|---|
| 1 | Without tenside | | | | 100 |
| 2 | Synperonic PE/F 85²⁾ | 4600 | 50 | 42.5 | 36 |
| 3 | Pluronic PE 6800 | 8000 | 80 | 49.1 | 34 |
| 4 | Tetronic 701 | 3600 | 10 | 38 | 51 |
| 5 | Tetronic 1307 | 18000 | 70 | 44.5 | 30 |
| 6 | Tetronic 1307 + Pluronic F38 (1:1) | | | 44.2 | 28 |
| 7 | Tetronic 908 | 25000 | 80 | 49.5 | 26 |
| 8 | Tetronic 908 + Pluronic F38 (1:1) | | | 51.7 | 28 |
| 9 (comparison) | Tween 80 | | | 39.5 | 70 |

| | | | | | |
|---|---|---|---|---|---|
| ¹⁾ Surface tension measured according to the Wilhelmy plate method (M. J. Schwuger, Lehrbuch der Grenzflächenchemie, Georg Thieme Verlag, New York Stuttgart 1996, page 132. | | | | | |
| ²⁾ Poloxamer manufactured by Uniqema. | | | | | |

## Claims

1. A process for the manufacture of a moulding, comprising the steps:
(a) applying to at least one surface of a multi-part UV-transmissible quartz or glass mould a solution of a poly(oxyethylene)-poly(oxypropylene) block copolymer,
(b) drying the solution on the mould,
(c) introducing an aqueous solution comprising a water-soluble prepolymer having crosslinkable groups into the mould,
(d) initiating of crosslinking by irradiation with UV-light,
(e) removing the mouldings from the mould, and
(f) washing and drying the mould,
wherein the water-soluble prepolymer having crosslinkable groups is a derivative of a polyvinyl alcohol having a molecular weight of at least about 2 000 that, based on the number of hydroxy groups of the polyvinyl alcohol, comprises from approximately 0.5 to approximately 80 % of units of formula 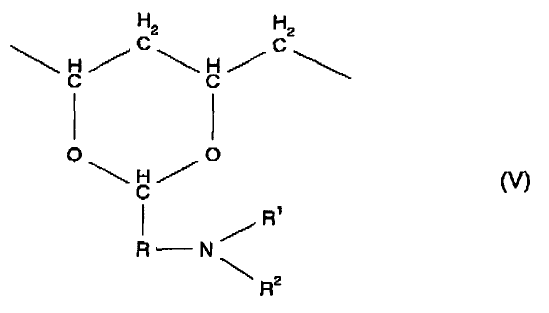 wherein R is C₁-C₈-alkylene, R¹ is hydrogen or C₁-C₇-alkyl and R² is an olefinically unsaturated, electron-attracting, copolymerizable radical preferably having up to 25 carbon atoms.

2. The process according to claim 1, wherein the steps (a) to (f) are repeated in a cycle.

3. The process according to claim 1 or 2, wherein the moulding is an ophthalmic lens, in particular a contact lens or an intraocular lens.

4. The process according to any one of the claims 1 to 3, wherein the poly(oxyethylene)-poly(oxypropylene) block copolymer is of formula
HO-(CH₂CH₂-O)_{y}-(CH(CH₃)CH₂O)ₓ-(CH₂CH₂O)_{y}-H x (II),
HO-(CH(CH₃)CH₂O)ₓ-(CH₂CH₂O)_{y}-(CH₂CH(CH₃)O)ₓ-H x (II), 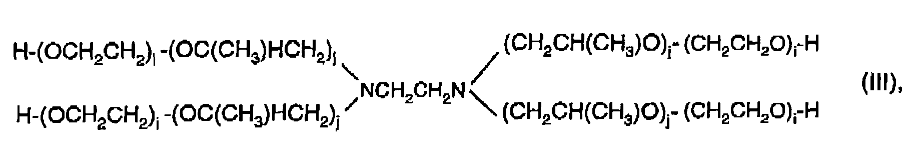
or 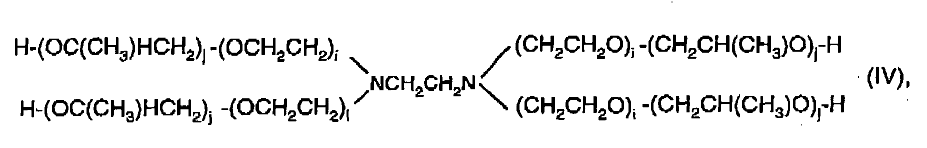 wherein i, j, x and y each have values from 2 to 4.00.

5. The process according to claim 4, wherein the block copolymer is of formula (I) having a number average molecular weight of from 3,000 to 15,000.

6. The process according to claim 4, wherein the block copolymer is of formula (III) having a number average molecular weight of from 10,000 to 30,000.

7. The process according to any one of claims 1 to 6, wherein the solution comprises, based on the total weight of the solution, of from 0.01 to 3 % (w/w), preferably of from 0.1 to 0.25 % (w/w) of the block copolymer.

8. The process according to any one of claims 1 to 7, wherein the solution comprises a C₁-C₄-alkanol, C₂-C₆-dialkylether, or C₃-C₅-ketone.

9. The process according to any one of claims 1 to 8 wherein, in step (a), the solution of the tenside is applied by spraying or stamping.

10. The process according to any one of claims 1 to 9, wherein the processing of each of steps (a) and (b) is less than 10 seconds.

11. The process according to any one of claims 1 to 10, wherein, in the units of formula (V) of claim 1, R is methylene, R¹ is hydrogen and R² is acryloyl.

## Patentansprüche

1. Verfahren zur Herstellung eines Formlings, umfassend die Schritte:
(a) Auftragen auf mindestens eine Oberfläche von einer mehrteiligen UV-durchlässigen Quarz- oder Glasform einer Lösung eines Poly(oxyethylen)-Poly(oxypropylen)-Blockcopolymers;
(b) Trocknen der Lösung auf der Form;
(c) Einführen einer wässrigen Lösung, umfassend ein in Wasser lösliches Prepolymer mit vernetzbaren Gruppen in die Form;
(d) Starten von Vernetzen durch Bestrahlung mit UV-Licht; (e) Entfernen der Formlinge aus der Form und
(f) Waschen und Trocknen der Form,
wobei das in Wasser lösliche Prepolymer mit vernetzbaren Gruppen ein Derivat von einem Polyvinylalkohol mit einem Molekulargewicht von mindestens etwa 2000 darstellt, das bezogen auf die Anzahl an Hydroxygruppen des Polyvinylalkohols, ungefähr 0,5 bis ungefähr 80 % Einheiten der Formel 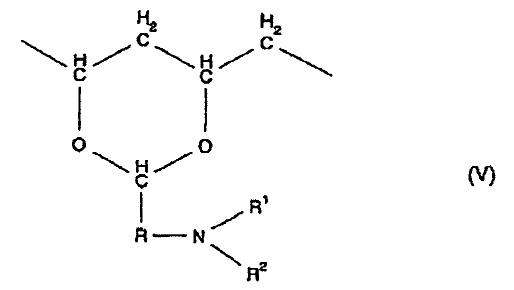 umfasst, worin R C₁-C₈-Alkylen darstellt, R¹ Wasserstoff oder C₁-C-₇-Alkyl darstellt und R² einen olefinisch ungesättigten elektronenanziehenden copolymerisierbaren Rest, vorzugsweise mit bis zu 25 Kohlenstoffatomen, darstellt.

2. Verfahren nach Anspruch 1, wobei die Schritte (a) bis (f) in einem Zyklus wiederholt werden.

3. Verfahren nach Anspruch 1 oder 2, wobei der Formling eine ophthalmische Linse, insbesondere eine Kontaktlinse oder eine Intraokularlinse, darstellt.

4. Verfahren nach einem der Ansprüche 1 bis 3, wobei das Poly(oxyethylen)-Poly(oxypropylen)-Blockcopolymer die Formel
HO-(CH₂CH₂-O)_{y}-(CH(CH₃)CH₂O)ₓ-(CH₂CH₂O)_{y}-H x (II),
HO-(CH(CH₃)CH₂O)ₓ-(CH₂CH₂O)_{y}-(CH₂CH(CH₃)O)ₓ-H x (II), 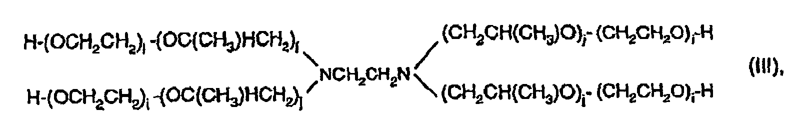
oder 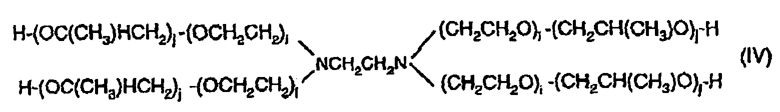 aufweist, worin i, j, x und y jeweils Werte von 2 bis 400 aufweisen.

5. Verfahren nach Anspruch 4, wobei das Blockcopolymer von der Formel (I) ist, mit einem zahlenmittleren Molekulargewicht von 3000 bis 15000.

6. Verfahren nach Anspruch 4, wobei das Blockcopolymer von der Formel (III) ist, mit einem zahlenmittleren Molekulargewicht von 10000 bis 30000.

7. Verfahren nach einem der Ansprüche 1 bis 6, wobei die Lösung, bezogen auf das Gesamtgewicht der Lösung, 0,01 bis 3 % (Gewicht / Gewicht), vorzugsweise 0,1 bis 0,25 % (Gewicht / Gewicht), des Blockcopolymers umfasst.

8. Verfahren nach einem der Ansprüche 1 bis 7, wobei die Lösung ein C₁-C₄-Alkanol, C₂-C₆-Dialkylether oder C₃-C₅-Keton umfasst.

9. Verfahren nach einem der Ansprüche 1 bis 8, wobei in Schritt (a) die Lösung des Tensids durch Sprühen oder Stempeln aufgetragen wird.

10. Verfahren nach einem der Ansprüche 1 bis 9, wobei das Verarbeiten von jedem der Schritte (a) und (b) weniger als 10 Sekunden beträgt.

11. Verfahren nach einem der Ansprüche 1 bis 10, wobei in den Einheiten der Formel (V) von Anspruch 1 R Methylen darstellt, R¹ Wasserstoff darstellt und R² Acryloyl darstellt.

## Revendications

1. Procédé de fabrication d'un moulage, comprenant les étapes consistant à :
(a) appliquer à au moins une surface d'un moule en plusieurs parties de quartz ou de verre transmetteur d'UV une solution de copolymère séquencé poly(oxyéthylène)-poly(oxypropylène),
(b) sécher la solution sur le moule,
(c) introduire dans le moule une solution aqueuse comprenant un prépolymère hydrosoluble ayant des groupes réticulables,
(d) initier la réticulation par irradiation avec une lumière UV,
(e) retirer les moulages du moule, et
(f) laver et sécher le moule,
dans lequel le prépolymère hydrosoluble ayant des groupes réticulables est un dérivé d'un alcool polyvinylique ayant un poids moléculaire d'au moins environ 2000 qui, sur la base du nombre de groupes hydroxy de l'alcool polyvinylique, comprend approximativement 0,5 à approximativement 80 % de motifs de formule : 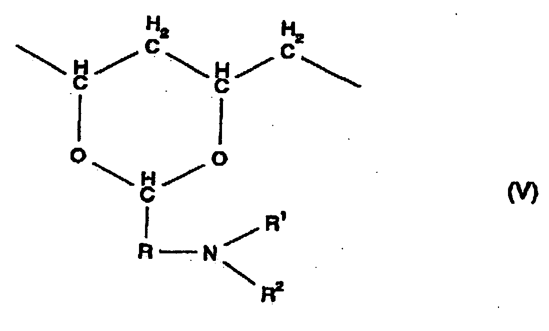 dans laquelle R est un groupe alkylène en C₁ à C₈, R¹ représente l'hydrogène ou un groupe alkyle en C₁ à C₇, et R² est un radical copolymérisable, attracteur d'électrons, oléfiniquement insaturé, ayant de préférence jusqu'à 25 atomes de carbone.

2. Procédé selon la revendication 1, dans lequel on répète au cours d'un cycle les étapes (a) à (f).

3. Procédé selon la revendication 1 ou 2, dans lequel le moulage est une lentille ophtalmique, en particulier une lentille de contact ou une lentille intraoculaire.

4. Procédé selon l'une quelconque des revendications 1 à 3, dans lequel le copolymère séquencé poly(oxyéthylène)-poly(oxypropylène) répond à la formule :
HO-(CH₂CH₂-O)_{y}-(CH(CH₃)CH₂O)ₓ (CH₂CH₂O)_{y}-H (I),
HO-(CH(CH₃)CH₂O)ₓ-(CH₂CH₂O)_{y}-(CH₂CH(CH₃)O)ₓ-H (I), 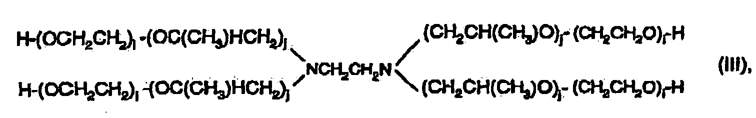
ou 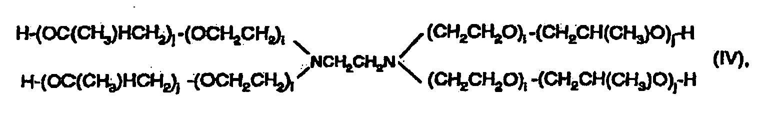 dans laquelle i, j, x et y ont chacun des valeurs de 2 à 400.

5. Procédé selon la revendication 4, dans lequel le copolymère séquencé répond à la formule (I), ayant un poids moléculaire moyen en nombre de 3000 à 15 000.

6. Procédé selon la revendication 4, dans lequel le copolymère séquencé répond à la formule (III), ayant un poids moléculaire moyen en nombre de 10 000 à 30 000.

7. Procédé selon l'une quelconque des revendications 1 à 6, dans lequel la solution comprend, sur la base du poids total de la solution, 0,01 à 3 % (poids/poids), de préférence 0,1 à 0,25 % (poids/poids) du copolymère séquencé.

8. Procédé selon l'une quelconque des revendications 1 à 7, dans lequel la solution comprend un alcanol en C₁ à C₄, un dialkyléther en C₂ à C₆ ou une cétone en C₃ à C₅.

9. Procédé selon l'une quelconque des revendications 1 à 8, dans lequel, dans l'étape (a), la solution de l'agent tensioactif est appliquée par pulvérisation ou marquage.

10. Procédé selon l'une quelconque des revendications 1 à 9, dans lequel le traitement de chacune des étapes (a) et (b) est inférieur à 10 secondes.

11. Procédé selon l'une quelconque des revendications 1 à 10, dans lequel, dans les motifs de formule (V) selon la revendication 1, R est un groupe méthylène, R¹ représente l'hydrogène, et R² est un groupe acryloyle.
